Europäisches Patentamt

European Patent Office

Office européen des brevets

(11) Publication number: **0 609 593 B1**

# EUROPEAN PATENT SPECIFICATION

(45) Date of publication of patent specification: **20.12.95** (51) Int. Cl.6: **G02B 5/28**

(21) Application number: **93300794.0**

(22) Date of filing: **03.02.93**

(54) **Optical filters**

(43) Date of publication of application:
**10.08.94 Bulletin 94/32**

(45) Publication of the grant of the patent:
**20.12.95 Bulletin 95/51**

(84) Designated Contracting States:
**BE CH DE DK ES FR IT LI NL SE**

(56) References cited:
**EP-A- 0 522 850**
**WO-A-92/16875**
**US-A- 2 890 624**
**US-A- 5 179 468**

(73) Proprietor: **BARR & STROUD LIMITED**
**1 Linthouse Road**
**Glasgow G51 4BZ,**
**Scotland (GB)**

(72) Inventor: **Kelly, Christopher Joseph**
**117 Welbeck Crescent,**
**Troon**
**Ayrshire, KA10 6AR,**
**Scotland (GB)**
Inventor: **Biagi, Michael Anthony**
**85 Nethercraigs Road**
**Paisley, PA2 8SG,**
**Scotland (GB)**
Inventor: **Monachan, Brian Cochrane**
**89 Rannoch Drive**
**Bearsden,**
**Glasgow,**
**Scotland (GB)**

(74) Representative: **MacDougall, Donald Carmichael et al**
**Cruikshank & Fairweather**
**19 Royal Exchange Square**
**Glasgow G1 3AE, Scotland (GB)**

**Description**

This invention relates to optical filters and in particular to a filter in the form of a multi-layer coating on a substrate.

Various optical devices are concerned with transmitting radiation over a relatively broad spectrum but in certain fields of use, particularly military use, the broad spectrum encompasses one or more discrete wavelengths or narrow wavebands at which high energy radiation exists and there is a need to prevent such high energy radiation being transmitted through the optical device. In one example the optical device may be a pair of goggles (or spectacles) to be worn by a human observer and on the one hand there is a need for the goggles to transmit radiation generally over the visible spectrum whilst on the other hand there is a need to protect the observers eyes from damaging laser radiation which may occur at one or more of at least three particularly-favoured laser radiation wavelengths.

According to the present invention there is provided an optical filter for inhibiting transmission of radiation at at least one wavelength which is known to be a laser wavelength in the form of a multi-layer coating adherent to a substrate, said coating comprising a plurality of superimposed layer collections, said plurality being $n$ in number where $n$ is at least four, each layer collection consisting of ordered first second and third layers, said first and third layers each being made of a first optical coating material and having a thickness of substantially 0.6 quarter wavelengths at a predetermined wavelength, said second layer being made of a second optical coating material and having a thickness of substantially 6.8 quarter wavelengths at said predetermined wavelength, one of said first and second optical coating materials having a high refractive index and the other of said optical coating materials having a low refractive index, whereby the coating is generally transmissive except in a plurality of narrow-waveband regions, said predetermined wavelength being selected so that at least one of said regions includes said known laser wavelength.

The number $n$ may be in the range 4 to about 20 (being limited at the upper end of the range by manufacturing processes) and the greater the value of $n$ the less is the transmission within said narrow-waveband regions.

The first layer of each said layer collection may be composed of said high refractive index material. Alternatively the first layer of each said layer collection may be composed of said low refractive index material. Typical high refractive index optical coating materials have refractive indices in the range 1.9 to 2.5 and are: zinc sulphide, titania, certain rare earth oxides and certain sulphides and selenides. Typical low refractive index optical coating materials have refractive indices in the range 1.3 to 1.7 and are: thorium fluoride, silica, certain rare earth fluorides and certain oxides.

The optical filter of the present invention may be one of a pair of spaced filters separated by a medium which preferably possesses absorption properties as a result of which the combination exhibits improved rejection efficiency within the narrow-waveband regions in comparison with a single coating with a given value of $n$. Also, in this arrangement it is preferred that each optical coating material possesses a small but finite degree of absorption since this attenuates multiple reflections between the coatings and improves the rejection efficiency within the narrow-waveband regions for a given value of $n$.

By virtue of the presence of said narrow-waveband regions the optical filter of the present invention provides rejection of incident laser radiation. The rejection efficiency for normal incidence of the laser radiation on the filter is substantially maintained for incidence angles within a limited angular range the magnitude of which is determined by the width of the narrow-waveband region of the coating, because at non-normal incidence the coating characteristics effectively shift spectrally downwards in proportion to the angle of incidence.

The coating of the optical filter of the present invention may be index-matched to its adjoining media.

The filter of the present invention may incorporate a substrate in the form of a colour glass for rejecting a particular wavelength or narrow-waveband region to which the multi-layer coating is transmissive.

Embodiments of the present invention will now be described by way of example with reference to the accompanying drawings which illustrate the transmission characteristics of different optical filters of the present invention.

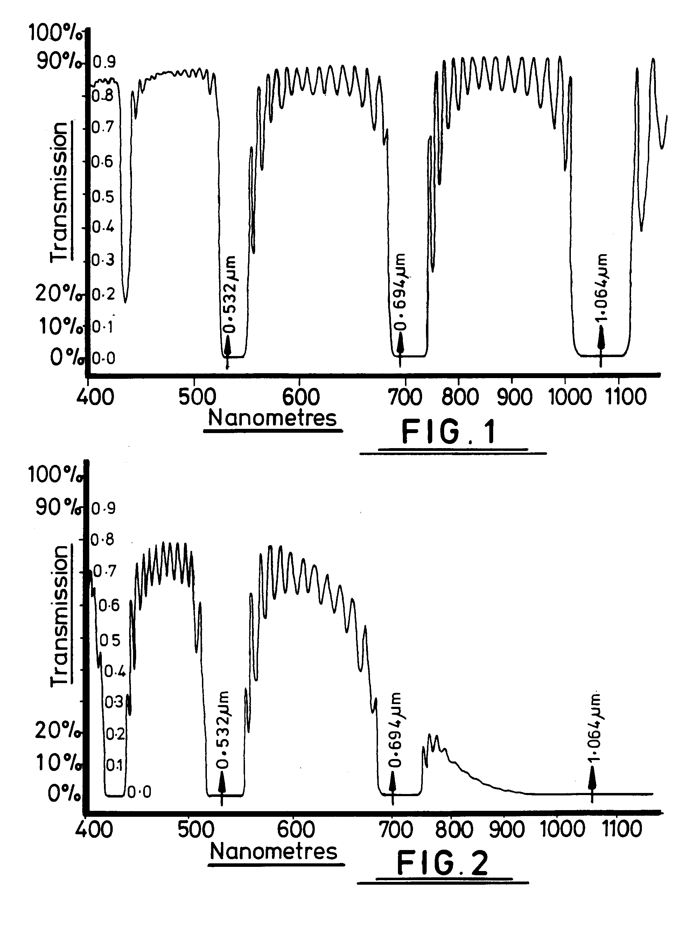

In a first embodiment the substrate is clear glass and the coating is composed of superimposed layer collections each of which has first and third layers made of zinc sulphide and a second layer made of thorium fluoride. The zinc sulphide layers are each 0.6 quarter wavelengths thick at a predetermined wavelength and the thorium fluoride layer is 6.8 quarter wavelengths thick at said predetermined wavelength. A transmission characteristic of an optical filter is shown in Fig. 1 and at the three particularly-favoured laser radiation wavelengths of 0.532μm, 0.694μm, and 1.064μm the optical density of the filter provides effective blocking protection against transmission of laser radiation for a range of incidence angles of the order of ±22° with an overall transmission efficiency of the order of 50% elsewhere in the visible spectrum as measured by the conventional integrated visible photopic transmission factor F, where

$$F \; = \; \frac{\displaystyle\int_{400}^{700} T(\lambda) \cdot E(\lambda) \cdot E(D_{65}) \cdot d\lambda}{\displaystyle\int_{400}^{700} E(\lambda) \cdot E(D_{65}) \cdot d\lambda}$$

T($\lambda$) being filter transmission with respect to wavelength $\lambda$;

E($\lambda$) being the photopic eye response as a function of wavelength $\lambda$;

E($D_{65}$) being the response of the standard $D_{65}$ illuminant as a function of wavelength $\lambda$.

More particular quantitative values for the filter of the first embodiment are set forth in Table I, the angular range values given being for simultaneous effective protection at the three laser radiation wavelengths.

In a second embodiment two filters of the Table I type are cemented together with a non-absorbing optical cement, namely Norland Inc. cement designation No. NOA61 and the combined filter arrangement displays improved characteristics as set forth in Table II, the angular range values given being for simultaneous effective protection at the three laser radiation wavelengths.

By way of example and with reference to the second embodiment utilising combined filters where the coating materials are free of absorption characteristics the improvement in optical density within the narrow-waveband region is relatively marginal (e.g. if the optical density of a filter is 4.0 the optical density of a combined filter is 4.3). If an absorption medium is utilised between the two filters, such as Schott NG 12 neutrally absorbing glass which has an absorption of about 10%, the optical density of the combined filter is 7.3. Where the optical coating materials of each filter possess an absorption of about 0.5%, as in the Table II embodiment, the optical density of the combined filter is 6.0. In both cases the overall transmission factor remains of the order of 40-50%.

In a third embodiment the materials are the same as in the first embodiment and the layer collections are the same in number but the first and third layers are made of thorium fluoride whilst the second layer is made of zinc sulphide. The thorium fluoride layers of the third embodiment are each 0.6 quarter wavelength thick at a wavelength of 0.543 $\mu$m and the zinc sulphide layers are each 6.8 quarter wavelengths thick at the same 0.543 $\mu$m wavelength. Quantitative values of transmission parameters are set forth in Table III for the third embodiment, and in comparison with the Table I values for the first embodiment it will be observed that there is very little difference. However the first embodiment has its angular performance limited by the coating behaviour at 0.532 $\mu$m whereas the third embodiment has its angular performance limited by the coating behaviour at 1.064 $\mu$m and colour glasses are readily available which are effectively non-transmitting at 1.064 $\mu$m but which are substantially fully transmitting at the visible region of the spectrum.

A fourth and preferred embodiment is therefore provided by the third embodiment modified by a colour glass, either as a substitute for or in addition to the clear glass substrate, of 2.5 mm thickness and made of LP3 colour glass (made and sold by Chance - Pilkington Ltd.). Quantitative values of transmission parameters are set forth in Table IV for the fourth embodiment and the transmission characteristic of this optical filter is shown in Fig. 2. It will be appreciated that the fourth embodiment provides substantially improved angular performance and provides effective blocking protection for a range of incidence angles of the order of ± 38° and overall transmission efficiency (F) of the order of 42%.

In a fifth embodiment two filters of the Table III type are cemented together with the same cement as in the second embodiment, and the combined filter arrangement displays the characteristics set forth in Table V.

In a sixth embodiment one filter of the Table III type and one filter of the Table IV type are cemented together with the same cement as in the second embodiment, and the combined filter arrangement displays the characteristics set forth in Table VI.

| Substrate | Optical Density | | | ANGULAR RANGE | IVPT % |
|---|---|---|---|---|---|
| | 0.532µm | 0.694µm | 1.064µm | | |

**TABLE I**

| Substrate | 0.532µm | 0.694µm | 1.064µm | ANGULAR RANGE | IVPT % |
|---|---|---|---|---|---|
| Clear glass | ⪢ 4.0 | ⪢ 4.0 | ⪢ 3.5 | ±20 to ±24° | 45–55 |

**TABLE II**

| Substrate | 0.532µm | 0.694µm | 1.064µm | ANGULAR RANGE | IVPT % |
|---|---|---|---|---|---|
| Clear glass | ⪢ 5.5 | ⪢ 5.0 | ⪢ 4.5 | ±23 to ±30° | 40–50 |

**TABLE III**

| Substrate | 0.532µm | 0.694µm | 1.064µm | ANGULAR RANGE | IVPT % |
|---|---|---|---|---|---|
| Clear glass | ⪢ 4.0 | ⪢ 4.0 | ⪢ 3.5 | ±22° to ±26° | 42–52 |

**TABLE IV**

| Substrate | 0.532µm | 0.694µm | 1.064µm | ANGULAR RANGE | IVPT % |
|---|---|---|---|---|---|
| Colour glass | ⪢ 4.0 | ⪢ 4.0 | ⪢ 6.0 | ±35° to ±40° | 37–47 |

**TABLE V**

| Substrate | 0.532µm | 0.694µm | 1.064µm | ANGULAR RANGE | IVPT % |
|---|---|---|---|---|---|
| Clear glass | ⪢ 5.0 | ⪢ 5.0 | ⪢ 4.0 | ±25° to ±30° | 35–45 |

**TABLE VI**

| Substrate | 0.532µm | 0.694µm | 1.064µm | ANGULAR RANGE | IVPT % |
|---|---|---|---|---|---|
| Colour glass | ⪢ 5.0 | ⪢ 5.0 | ⪢ 6.0 | ±37° to ±42° | 30–40 |

## Claims

1. An optical filter for inhibiting transmission of radiation at at least one wavelength which is known to be a laser wavelength in the form of a multi-layer coating adherent to a substrate, said coating comprising a plurality of superimposed layer collections, said plurality being $n$ in number where $n$ is at least four, each layer collection consisting of ordered first second and third layers, said first and third layers each being made of a first optical coating material and having a thickness of substantially 0.6 quarter wavelengths at a predetermined wavelength, said second layer being made of a second optical coating material and having a thickness of substantially 6.8 quarter wavelengths at said predetermined wavelength, one of said first and second optical coating materials having a high refractive index and the other of said optical coating materials having a low refractive index, whereby the coating is generally transmissive except in a plurality of narrow-waveband regions, said predetermined wavelength being selected so that at least one of said regions includes said known laser wavelength.

2. An optical filter as claimed in claim 1, wherein said high refractive index material has a refractive index in the range 1.9 to 2.5 and said low refractive index material has a refractive index in the range 1.3 to 1.7.

3. An optical filter as claimed in either preceding claim, wherein said high refractive index material is zinc sulphide and said low refractive index material is thorium fluoride.

4. An optical filter as claimed in any one of claims 1-3, wherein the first layer of each said layer collection is composed of said high refractive index material.

5. An optical filter as claimed in any one of claims 1-3, wherein the first layer of each said layer collection is composed of said low refractive index material.

6. An optical filter as claimed in any preceding claim, wherein said substrate is made of clear glass.

7. An optical filter as claimed in any one of claims 1-5, wherein said substrate is made of colour glass for rejecting a narrow waveband region to which the multi-layer coating is transmissive.

8. An optical filter assembly comprising a pair of spaced optical filters each as claimed in claim 1 and separated by a medium having absorption properties.

**Patentansprüche**

1. Optisches Filter zur Unterbindung der Übertragung von Strahlung bei wenigstens einer Wellenlänge, die als eine Laser-Wellenlänge bekannt ist, in Form eines mehrschichtigen Überzugs, der an einem Substrat haftet, wobei der Überzug eine Vielzahl von sich überlagernden Schichtansammlungen umfaßt, wobei die Vielzahl gleich der Zahl $\underline{n}$ ist, wenn $\underline{n}$ wenigstens gleich vier ist, wobei jede Schichtansammlung aus geordneten ersten, zweiten und dritten Schichten besteht, wobei die erste und die dritte Schicht jeweils aus einem ersten optischen Beschichtungsmaterial hergestellt werden und eine Stärke von im wesentlichen 0,6 Viertelwellenlängen bei einer festgelegten Wellenlänge haben, wobei die zweite Schicht aus einem zweiten optischen Beschichtungsmaterial herstellt wird und eine Stärke von im wesentlichen 6,8 Viertelwellenlängen bei der festgelegten Wellenlänge hat, wobei eines der ersten und der zweiten optischen Beschichtsmaterialien einen hohen Brechungskoeffizienten hat und das andere der optischen Beschichtungsmaterialien einen niedrigen Brechungskoeffizienten hat, wodurch der Überzug allgemein durchlässig ist, ausgenommen eine Vielzahl von schmalbandigen Wellenbereichen, wobei die festgelegte Wellenlänge so ausgewählt wird, daß wenigstens einer der Bereiche die bekannte Laser-Wellenlänge einschließt.

2. Optisches Filter nach Anspruch 1, bei dem das Material mit dem hohen Brechungskoeffizienten einen Brechungskoeffizienten im Bereich von 1,9 bis 2,5 hat und das Material mit dem niedrigen Brechungskoeffizienten einen Brechungskoeffizienten im Bereich von 1,3 bis 1,7 hat.

3. Optisches Filter nach einem der vorhergehenden Ansprüche, bei dem das Material mit dem hohen Brechungskoeffizienten Zinksulfid ist und das Material mit dem niedrigen Brechungskoeffizienten Thoriumfluorid ist.

4. Optisches Filter nach einem der Ansprüche 1 bis 3, bei dem sich die erste Schicht jeder der Schichtansammlungen aus dem Material mit dem hohen Brechungskoeffizienten zusammensetzt.

5. Optisches Filter nach einem der Ansprüche 1 bis 3, bei dem sich die erste Schicht jeder der Schichtansammlungen aus dem Material mit dem niedrigen Brechungskoeffizienten zusammensetzt.

6. Optisches Filter nach einem der vorhergehenden Ansprüche, bei dem das Substrat aus farblosem Glas hergestellt wird.

**7.** Optisches Filter nach einem der Ansprüche 1 bis 5, bei dem das Substrat aus Farbglas hergestellt wird, das einen schmalen Wellenband-Bereich zurückweist, für den der mehrschichtige Überzug durchlässig ist.

**8.** Optische Filterbaugruppe, die ein Paar im Abstand zueinander angeordneter optischer Filter jeweils nach Anspruch 1 aufweist und die durch ein Medium mit Absorptionseigenschaften voneinander getrennt sind.

**Revendications**

**1.** Filtre optique pour empêcher la transmission d'un rayonnement à au moins une longueur d'onde, connue comme étant une longueur d'onde de laser, sous forme d'un revêtement à couches multiples adhérent à un substrat, ledit revêtement comprenant une pluralité de collections de couches superposées, ladite pluralité étant au nombre de $\underline{n}$, $\underline{n}$ correspondant au moins à quatre, chaque collection de couches étant composée de premières, deuxièmes et troisièmes couches ordonnées, lesdites premières et troisièmes couches étant chacune composée d'un premier matériau de revêtement optique et ayant une épaisseur représentant pratiquement 0,6 quarts de longueurs d'onde à une longueur d'onde prédéterminée, ladite deuxième couche étant composée d'un deuxième matériau de revêtement optique et ayant une épaisseur représentant pratiquement 6,8 quarts de longueurs d'ondes à ladite longueur d'onde prédéterminée, l'un desdits premier et deuxième matériaux de revêtement optique présentant un indice de réfraction élevé et l'autre desdits matériaux de revêtement optique présentant un faible indice de réfraction, le revêtement étant en général transmissif, sauf dans plusieurs régions à bande d'ondes étroite, ladite longueur d'ondes prédéterminée étant sélectionnée de sorte qu'au moins une desdites régions englobe ladite longueur d'onde de laser connue.

**2.** Filtre optique selon la revendication 1, dans lequel ledit matériau à indice de réfraction élevé a un indice de réfraction compris dans l'intervalle allant de 1,9 à 2,5, ledit matériau à faible indice de réfraction ayant un indice de réfraction compris dans l'intervalle allant de 1,3 à 1,7.

**3.** Filtre optique selon l'une quelconque des revendications précédentes, dans lequel ledit matériau à indice de réfraction élevé est du sulfure de zinc, ledit matériau à faible indice de réfraction étant du fluorure de thorium.

**4.** Filtre optique selon l'une quelconque des revendications 1 à 3, dans lequel la première couche de chacune desdites collections de couches est composée dudit matériau à indice de réfraction élevé.

**5.** Filtre optique selon l'une quelconque des revendications 1 à 3, dans lequel la première couche de chacune desdites collections e couches est composée dudit matériau à faible indice de réfraction.

**6.** Filtre optique selon l'une quelconque des revendications précédentes, dans lequel ledit substrat est composé de verre clair.

**7.** Filtre optique selon l'une quelconque des revendications 1 à 5, dans lequel ledit substrat est composé de verre de couleur pour rejeter une région à bande d'onde étroite vers laquelle le revêtement à couches multiples est transmissif.

**8.** Assemblage de filtre optique comprenant une paire de filtres optiques espacés, chacun selon la revendication 1, et séparés par un matériau ayant des propriétés d'absorption.

FIG . 1

FIG . 2